# EUROPÄISCHE PATENTSCHRIFT

(11) **EP 3 095 993 B1**
(45) Veröffentlichungstag und Bekanntmachung des Hinweises auf die Patenterteilung: **04.09.2024**
(21) Anmeldenummer: 16167076.5
(22) Anmeldetag: 26.04.2016
(51) Int. Cl.: F02D 41/00, F02D 13/02, F02D 19/02, F02D 19/08, F02B 3/06

(54) **VERFAHREN ZUM BETREIBEN EINES GROSSDIESELMOTORS, VERWENDUNG DIESES VERFAHRENS SOWIE GROSSDIESELMOTOR**
METHOD FOR OPERATING A LARGE DIESEL ENGINE, USE OF THIS METHOD AND LARGE DIESEL ENGINE
PROCEDE DE FONCTIONNEMENT D'UN GROS MOTEUR DIESEL, UTILISATION D'UN TEL PROCEDE ET GROS MOTEUR DIESEL

(30) Priorität: 19.05.2015 EP 15168103
(43) Veröffentlichungstag der Anmeldung: 23.11.2016
(73) Patentinhaber: WinGD AG, 8400 Winterthur (CH)
(72) Erfinder: Ott, Marcel, 8406 Winterthur (CH)
(74) Vertreter: IPS Irsch AG

(56) Entgegenhaltungen:
- EP-A1- 2 860 376
- WO-A1-94/29585
- DE-A1- 102004 001 825
- DE-A1- 19 809 618

## Beschreibung

Die Erfindung betrifft ein Verfahren zum Betreiben eines Grossdieselmotors, einen Grossdieselmotor und die Verwendung des Verfahrens gemäss dem Oberbegriff des unabhängigen Patentanspruchs der jeweiligen Kategorie.

Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien.

Ein weiterer wesentlicher Punkt ist seit einigen Jahren mit zunehmender Bedeutung die Qualität der Abgase, insbesondere die Stickoxid Konzentration in den Abgasen. Hier werden die rechtlichen Vorgaben und Grenzwerte für die entsprechenden Abgasgrenzwerte immer weiter verschärft. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen problematischer wird, weil die Einhaltung der Abgasgrenzwerte immer schwieriger, technisch aufwändiger und damit teurer wird oder am Ende deren Einhaltung gar nicht mehr sinnvoll möglich ist.

In der Praxis besteht daher bereits seit langem das Bedürfnis nach sogenannten "Dual-Fuel Motoren", also Motoren, die mit zwei unterschiedlichen Brennstoffen betrieben werden können. In einem Gasmodus wird ein Gas, z.B. ein Erdgases wie LNG (liquefied natural gas), oder ein Gas in Form eines Autogases oder eines anderen zum Antrieb einer Brennkraftmaschine geeigneten Gases verbrannt, während in einem Flüssigmodus ein geeigneter flüssiger Brennstoff wie Benzin, Diesel, Schweröl oder andere geeignete flüssige Brennstoffe in demselben Motor verbrannt werden können. Die Motoren können dabei sowohl Zweitakt- als auch Viertaktmotoren sein und es kann sich dabei um kleine, mittelgrosse aber auch um Grossmotoren, insbesondere auch um längsgespülte Zweitakt-Grossdieselmotoren handeln.

Mit dem Begriff "Grossdieselmotor" sind auch solche Grossmotoren gemeint, die ausser im Dieselbetrieb, der durch die Selbstzündung des Brennstoffs gekennzeichnet ist, auch in einem Ottobetrieb, der durch die Fremdzündung des Brennstoffs gekennzeichnet ist, oder in Mischformen aus diesen beiden betrieben werden kann. Ferner umfasst der Begriff Grossdieselmotor insbesondere auch die genannten Dual-Fuel-Motoren und solche Grossmotoren, bei denen die Selbstzündung des Brennstoffs zur Fremdzündung eines anderen Brennstoffs genutzt wird.

Im Flüssigmodus wird üblicherweise der Brennstoff direkt in den Brennraum des Zylinders eingebracht und verbrennt dort nach dem Prinzip der Selbstzündung. Im Gasmodus ist es bekannt, nach dem Otto-Prinzip das Gas im gasförmigen Zustand mit der Spülluft zu vermischen, um so im Brennraum des Zylinders ein zündfähiges Gemisch zu erzeugen. Bei diesem Niederdruckverfahren erfolgt die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt. Ein Dual-Fuel Motor kann während des Betriebs vom Gasmodus in den Flüssigmodus umgeschaltet werden und umgekehrt.

Aber auch reine Gasmotoren, also Motoren, die nur mit Gas und nicht alternativ noch mit Diesel, Schweröl oder einem anderen Brennstoff betreibbar sind werden nachgefragt, insbesondere dann, wenn hohe Abgasstandards gefordert sind, die mit vertretbarem technischen Aufwand wirtschaftlich sinnvoll nur durch die Verbrennung von Gas eingehalten werden können. Ein solcher reiner Gasmotor ist beispielweise in der WO 2010 147071 A1 angegeben. Weiterer Stand der Technik findet sich z.B. in der DE 10 2010 005814 A1, DE 198 09 618 A1, WO 94/29585 A1, EP 2 860 376 A1 und DE 10 2004 001825 A1.

Ganz gleich ob es sich um einen Dual-Fuel Motor oder um einen reinen Gasmotor handelt ist der Vorgang der Einbringung des Brennstoffs Gas in den Brennraum des Zylinders einer entsprechenden Hubkolbenbrennkraftmaschine von entscheidender Bedeutung für den zuverlässigen, schadstoffarmen und sicheren Betrieb eines solchen Motors. Im Gasmodus ist insbesondere das Einstellen des korrekten Verhältnisses von Spülluft zu Gas, das sogenannte Luft/Kraftstoffverhältnis, von entscheidender Bedeutung. In einem Grossdieselmotor wird die Spül- oder Ladeluft üblicherweise von einem Turbolader zur Verfügung gestellt, der einen Spül- oder Ladeluftdruck generiert, welcher von der Last des Motors und damit von der Leistung bzw. vom Drehmoment bzw. der Drehzahl des Motors abhängt. Für einen gegebenen Spülluftdruck lässt sich die Masse der Luft im Zylinder berechnen und dann für das jeweilige benötigte Antriebsmoment, welches vom Motor generiert wird, bzw. für die gewünschte Drehzahl eine geeignete Menge des gasförmigen Brennstoffs bestimmen, der für diesen Betriebszustand zu einem optimalen Verbrennungsprozess führt.

Insbesondere, wenn der Gasmodus nach dem Otto-Prinzip betrieben wird, ist die korrekte Einstellung des Luft-Gas-Verhältnisses von entscheidender Bedeutung für einen möglichst schadstoffarmen, effizienten und wirtschaftlichen Betrieb des Motors. Ist der Gasanteil zu hoch, so wird das Luft-Gas-Gemisch zu fett. Die Verbrennung des Gemischs erfolgt zu schnell oder zu früh was zum Klopfen des Motors führen kann. Da der Verbrennungsprozess dann nicht mehr korrekt auf die Kolbenbewegung im Zylinder abgestimmt ist, führt dies unter anderem auch dazu, dass die Verbrennung teilweise gegen die Bewegung des Kolbens arbeitet.

Auch wenn die korrekte Einstellung des Luft-Gas-Verhältnisses in modernen Grossdieselmotoren unter normalen Betriebsbedingungen keine grösseren Probleme mehr darstellt, so ergeben sich unter Betriebsbedingungen mit sehr plötzlichen, häufigen und starken Lastwechseln des Motors häufig Schwierigkeiten.

Als ein Beispiel sei hier genannt, wenn ein von einem Grossdieselmotor angetriebenes Schiff in schweren Seegang gerät. Dies kann zur Folge haben, dass die von dem Motor direkt angetriebene Schiffsschraube durch den hohen Wellengang mehr oder minder periodisch teilweise oder sogar ganz aus dem Wasser herauskommt, um anschliessend wieder vollständig einzutauchen. Dies hat natürlich sehr grosse und plötzliche Lastwechsel des Motors, bzw. des vom Motor auf das Wasser übertragenen Antriebsdrehmoments zur Folge. Da das Turboladersystem zur Bereitstellung der Spülluft phasenverschoben auf den Lastwechsel des Motors reagiert, kann es in solchen Betriebszuständen möglicherweise passieren, dass das Luft-Gas-Gemisch im Zylinder aufgrund eines zu niedrigen Spülluftdrucks zu fett wird, was dann zu einer schnellen oder klopfenden Verbrennung führt, die natürlich nachteilig ist. Solche schnellen und plötzlichen Lastwechsel sind im Gasmodus in der Praxis nur sehr schwer oder gar nicht mehr regelbar, sodass beispielsweise ein Herunterfahren der Motorleistung oder eine ständige Änderung bzw. Anpassung der Motordrehzahl notwendig wird oder aber ein Wechsel vom Gasmodus in den Flüssigmodus. Bei einem Grossdieselmotor, der im Flüssigmodus beispielsweise mit Schweröl betrieben wird, kann es möglicherweise in Zukunft aufgrund der geltenden Abgasbestimmungen gar nicht mehr zulässig sein, ihn in Küstennähe im Flüssigmodus zu betreiben, weil sich im Flüssigmodus gegebenenfalls die Abgasgrenzwerte nicht mehr einhalten lassen.

Ein anderes Beispiel, bei welchem sehr plötzliche, häufige oder starke Lastwechsel des Motors auftreten können, ist der Manövrierbetrieb eines Schiffes.

Ausgehend von diesem Stand der Technik ist es daher eine Aufgabe der Erfindung, ein Verfahren zum Betreiben eines Grossdieselmotors vorzuschlagen, mit welchem der Grossdieselmotor auch bei plötzlichen, häufigen oder starken Laständerungen, wie sie beispielsweise bei einem Schiff im schweren Seegang oder im Manövrierbetrieb auftreten, noch zuverlässig, effizient und umweltfreundlich betrieben werden kann. Ferner ist es eine Aufgabe der Erfindung, einen entsprechenden Grossdieselmotor vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zum Betreiben eines Grossdieselmotors vorgeschlagen, welches die Merkmale des Anspruchs 1 aufweist.

Dadurch, dass durch die Korrektur des Schliesswinkels ein Transient-Schliesswinkel für das Auslassventil bestimmt wird, kann die Luftmenge, die während eines Arbeitszyklus im Zylinder komprimiert und für die Verbrennung zur Verfügung gestellt wird, gezielt und kontrolliert eingestellt werden. Hierdurch kann gewährleistet werden, dass die Verbrennung des Luft-Gas-Gemisches im Zylinder nicht in den Bereich einer zu schnellen oder klopfenden Verbrennung gelangt, und dass die Verbrennung des Luft-Gas-Gemisches im Zylinder nicht in den Bereich gelangt, in dem das Gemisch zu mager ist, d.h. die im Zylinder vorhandene Luftmenge ist zu gross und es kann zu Zündaussetzern kommen. Falls der momentan vorhandene Ladedruck der Spülluft zu gering für eine optimale Zusammensetzung des Luft-Gas-Gemisches ist, wird der Korrekturwert so festgelegt, dass der Transient-Schliesswinkel für das Auslassventil kleiner ist als im normalen Gasbetrieb, das heisst bezogen auf den Arbeitszyklus schliesst das Auslassventil jetzt früher, sodass eine grössere Luftmenge im Zylinder für die Kompression bereitsteht. Dadurch lässt sich der zu geringe Ladedruck der Spülluft ausgleichen. Falls der momentan vorhandene Ladedruck der Spülluft zu gross für eine optimale Zusammensetzung des Luft-Gas-Gemisches ist, wird der Korrekturwert so festgelegt, dass der Transient-Schliesswinkel für das Auslassventil grösser ist als im normalen Gasbetrieb, das heisst bezogen auf den Arbeitszyklus schliesst das Auslassventil jetzt später, sodass eine kleinere Luftmenge im Zylinder für die Kompression bereitsteht. Dadurch lässt sich der zu hohe Ladedruck der Spülluft ausgleichen.

Somit die ist es möglich, den Gasmodus auch bei plötzlichen, häufigen oder periodischen Lastwechseln oder Laständerungen weiter zu benutzen, ohne dass die Gefahr eines ineffizienten, schadstoffreichen und unwirtschaftlichen Betriebs resultiert.

Erfindungsgemäss ist der Grossdieselmotor als Dual-Fuel Motor zur Verbrennung eines Gases und zur Verbrennung eines flüssigen Brennstoffs, insbesondere Diesel oder Schweröl, ausgestaltet. Durch das erfindungsgemässe Verfahren wird es somit ermöglicht, dass ein Dual-Fuel Motor selbst bei plötzlichen und häufigen Lastwechseln noch effizient im Gasmodus betrieben werden kann. Im Falle des wichtigen Anwendungsbeispiels eines Grossdieselmotors als Antriebsaggregat eines Schiffes bedeutet dies, dass auch bei schwerem Seegang oder im Manövrierbetrieb der Gasmodus weiterhin effizient genutzt werden kann.

Erfindungsgemäss wird der Korrekturwert zu dem Schliesswinkel addiert, um den Transient-Schliesswinkel zu bestimmen, denn dies stellt eine besonders einfache Art der Korrektur des Schliesswinkels dar.

Falls das Auslassventil früher geschlossen werden soll, so ist der Korrekturwert negativ. In der Praxis hat es sich bewährt, wenn dabei sein Betrag höchsten 60 Grad beträgt.

Falls das Auslassventil später geschlossen werden soll, so ist der Korrekturwert positiv. In der Praxis hat es sich bewährt, wenn dabei der Korrekturwert höchstens 60 Grad beträgt.

Bei dem erfindungsgemässen Verfahren wird im Transientmodus auch die Menge an Gas beschränkt, die pro Arbeitszyklus in den Zylinder eingebracht wird. Zusätzlich zu dem Gas wird dann eine vorbestimmte Menge an flüssigem Brennstoff in den Zylinder eingebracht, um die aufgrund der beschränkten oder reduzierten Gaszufuhr fehlende Leistung auszugleichen. Bei dieser bevorzugten Ausführungsform umfasst der Transientmodus die folgenden Schritte:
- Festlegen eines Sollwertes für die Drehzahl oder das Drehmoment des Motors
- Bestimmen einer Obergrenze für die Menge an Gas, die pro Arbeitszyklus des Grossdieselmotors als Brennstoff bereitgestellt wird,
- Bestimmen einer Zusatzmenge eines flüssigen Brennstoffs, der zusätzlich zu dem Gas in den Brennraum eingebracht wird, wobei die Zusatzmenge so bemessen ist, dass der Sollwert für die Drehzahl realisiert wird. Die Begrenzung der Menge an Gas im Transientmodus stellt eine weitere bevorzugte Massnahme dar, die es insbesondere in Kombination mit der Änderung des Schliesswinkels für das Auslassventil in effizienter Weise ermöglicht, die Zusammensetzung des Luft-Gas-Gemisches im Zylinder in den Grenzen zu halten, in denen ein optimaler Verbrennungsprozess gewährleistet ist.

Die Beschränkung des zugeführten Gases auf eine Obergrenze trägt insbesondere dazu bei, dass die Verbrennung des Luft-Gas-Gemisches im Zylinder nicht in den Bereich einer zu schnellen oder klopfenden Verbrennung gelangt. Die aufgrund der beschränkten oder reduzierten Gaszufuhr fehlende Leistung zum Erreichen der gewünschten Soll-Drehzahl wird dann dadurch generiert, dass im Transientmodus zusätzlich zu dem Gas die vorbestimmte Menge an flüssigem Brennstoff in den Zylinder eingebracht wird, deren Verbrennung die fehlende Energie bzw. Leistung liefert.

Insbesondere mit dieser Ausführungsform ist es somit möglich, eine ähnliche Lastantwort in einem Grossdieselmotor zu realisieren, der zumindest in einem Gasmodus betreibbar ist, wie in einem Grossdieselmotor, der nur im Flüssigmodus betrieben wird. Dies wird dadurch möglich, dass das Luft-Gas-Gemisch im Zylinder nicht zu fett und auch nicht zu mager werden kann und die zusätzliche Verbrennung des flüssigen Brennstoffs, die in der Regel nach dem Diesel-Prinzip erfolgt, wesentlich weniger empfindlich auf Änderungen im Spülluftdruck reagiert. Auch erhöht sich die Laufruhe des Motors und die Geschwindigkeitsfluktuationen werden deutlich reduziert.

Es ist vorteilhaft, wenn der jeweils aktuelle zur Verfügung stehende Druck der Spülluft zur Bestimmung der Obergrenze für die Menge an Gas herangezogen wird. Somit lässt sich der Anteil, der auf der Verbrennung des Gases beruht, optimieren.

Gemäss einer Ausführungsform wird der Transientmodus manuell eingeleitet. So kann beispielsweise auf einem Schiff das Bedienpersonal beim Eintreten von schwerem Seegang oder im Manövrierbetrieb den Transientmodus des Motors aktivieren.

Es ist bevorzugt, wenn alternativ oder ergänzend der Transientmodus in Abhängigkeit von mindestens einem der folgenden Parameter eingeleitet wird: aktueller Druck der Spülluft, Zylinderdruck, berechnetes Luft-zu-Gas-Verhältnis, Signal eines Klopfdetektors, Verhältnis aus Drehzahl zu Last des Motors, Änderung des Verhältnisses aus Drehzahl zu Last des Motors, Drehmoment des Motors, Änderung des Drehmoments, Menge des benötigten Brennstoffs für die Einspritzung, Änderung der Menge des benötigten Brennstoffs für die Einspritzung. Die kontinuierliche oder regelmässige Bestimmung mindestens einer dieser Parameter ermöglicht auch eine automatische Aktivierung des Transientmodus.

Bei der Ausführungsform mit der zusätzlichen Verbrennung des flüssigen Brennstoffs gibt es mehrere bevorzugte Varianten, um im Transientmodus die Zusatzmenge des flüssigen Brennstoffs in den Brennraum einzubringen:
Die Zusatzmenge des flüssigen Brennstoffs kann mittels einer Einspritzvorrichtung in den Brennraum eingebracht werden, welche in einem Flüssigmodus des Grossdieselmotors verwendet wird.

Die Zusatzmenge des flüssigen Brennstoffs kann mittels einer Piloteinspritzvorrichtung in den Brennraum eingebracht werden, welche im Gasmodus zur Zündung des Gases verwendet wird.

Die Zusatzmenge des flüssigen Brennstoffs kann mittels einer separaten Einspritzvorrichtung in den Brennraum eingebracht werden, welche für den Transientmodus vorgesehen ist.

Auch bezüglich der Zuführung des Gases in den Brennraum gibt es mehrere bevorzugte Varianten:
Die Zuführung des Gases in den Zylinder kann durch einen Zylinderliner hindurch erfolgen. Hierzu sind an sich bekannte Gaszuführsysteme bekannt, die an der Wandung des Zylinders vorgesehen sind und das Gas durch den Zylinderliner in den Innenraum des Zylinders einbringen. Solche Gaszuführsysteme sind vorzugsweise so angeordnet, dass sie das Gas an einer Stelle in den Zylinder einbringen, die vom oberen oder unteren Totpunkt des Kolbens im Zylinder eine Entfernung hat, insbesondere eine solche, die 40%-60%, vorzugsweise 50%, des Abstands zwischen dem oberem Totpunkt und dem unterem Totpunkt beträgt.

Die Zuführung des Gases in den Zylinder kann auch an einem Zylinderkopf erfolgen. Auch hierfür sind Gaszuführsysteme bekannt.

Auch ist es möglich, dass das Gas der Spülluft zugeführt wird, bevor die Spülluft in den Zylinder eingebracht wird oder wenn die Spülluft in den Zylinder eingebracht wird. Die letztgenannte Variante kann insbesondere auch so realisiert werden, dass eine oder mehrere Gaseinlassdüsen an einem bzw. an mehreren Stege(n) vorgesehen sind, die benachbarte Spülluftöffnungen oder Spülluftschlitze voneinander trennen.

Erfindungsgemäss wird ferner ein Grossdieselmotor vorgeschlagen, welcher zumindest in einem Gasmodus betreibbar ist und welcher nach einem erfindungsgemässen Verfahren betrieben wird. Die hieraus resultierenden Vorteile entsprechen den voranstehenden Erläuterungen des erfindungsgemässen Verfahrens.

Erfindungsgemäss ist der Grossdieselmotor als Dual-Fuel Motor zur Verbrennung eines Gases und zur Verbrennung eines flüssigen Brennstoffs, insbesondere Diesel oder Schweröl, ausgestaltet.

In einer bevorzugten Ausführungsform ist eine Motorensteuerung vorgesehen, welche eine Kontrolleinrichtung zum Einleiten und Durchführen des Transientmodus umfasst.

Ferner wird erfindungsgemäss die Verwendung eines erfindungsgemässen Verfahrens zur Nachrüstung eines Grossdieselmotors, insbesondere eines Duel-Fuel Motors vorgeschlagen. Da sich das erfindungsgemässe Verfahren in vielen Fällen ohne grösseren zusätzlichen apparativen Aufwand realisieren lässt, ist es insbesondere auch dafür geeignet, bereits existierende Grossdieselmotoren umzurüsten bzw. nachzurüsten, damit diese insbesondere bei häufigen und plötzlich auftretenden Laständerungen, beispielsweise bei schwerem Seegang, effizient, sicher und umweltfreundlich betrieben werden können.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:
- Fig. 1:: eine schematische Darstellung eines Ausführungsbeispiels eines erfindungsgemässen Grossdieselmotors,
- Fig. 2:: ein schematische Darstellung zur Veranschaulichung der Abhängigkeit des Drehmoments vom Luft-Gas Verhältnis in dem Ausführungsbeispiel des Grossdieselmotors,
- Fig. 3:: eine schematische Darstellung eines ersten Ausführungsbeispiels eines erfindungsgemässen Verfahrens,
- Fig. 4:: eine schematische Darstellung eines zweiten Ausführungsbeispiels eines erfindungsgemässen Verfahrens, und
- Fig. 5:: eine schematische beispielhafte Darstellung des zeitlichen Verlaufs des Drehmoments.

Bei der folgenden Beschreibung der Erfindung anhand von Ausführungsbeispielen wird mit beispielhaftem Charakter auf den für die Praxis besonders wichtigen Fall eines Grossdieselmotors Bezug genommen, der als Dual-Fuel Motor ausgestaltet ist, also als ein Motor, der mit zwei unterschiedlichen Brennstoffen betrieben werden kann. Im speziellen kann dieses Ausführungsbeispiel des Grossdieselmotors in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossdieselmotor kann aber auch in einem Gasmodus betrieben werden, bei dem ein als Brennstoff dienendes Gas, beispielsweise Erdgas, in Form eines Luft-Gas-Gemisches im Brennraum zur Zündung gebracht wird. Im speziellen arbeitet der Grossdieselmotor im Gasmodus nach einem Niederdruckverfahren, d.h. das Gas wird im gasförmigen Zustand in den Zylinder eingebracht. Die Vermischung mit der Luft kann dabei im Zylinder selbst erfolgen oder auch schon vor dem Zylinder. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge flüssiger Brennstoff in den Brennraum eingebracht wird, der sich dann selbstentzündet und dadurch die Fremdzündung des Luft-Gas-Gemisches verursacht.

Der Grossdieselmotor kann sowohl als Viertakt-Motor als auch als Zweitaktmotor ausgestaltet sein. Bei den hier beschriebenen Ausführungsbeispielen ist der Grossdieselmotor als längsgespülter Zweitakt-Grossdieselmotor ausgestaltet, der im Flüssigmodus mit einem Common-Rail System arbeitet.

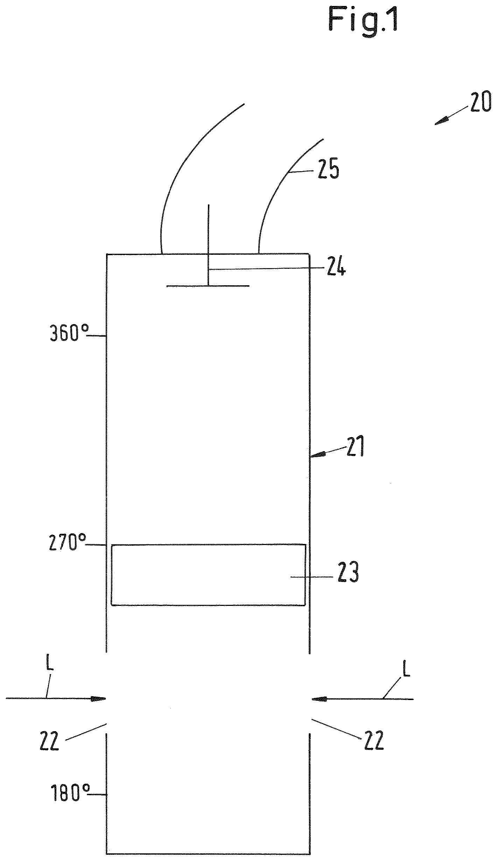

Fig. 1 zeigt in einer stark schematisierten Darstellung einen Zylinder 21 dieses Ausführungsbeispiels eines Grossdieselmotors, der gesamthaft mit dem Bezugszeichen 20 bezeichnet ist. Im Inneren des Zylinders 21 bewegt sich in an sich bekannter Art ein Kolben 23.

Der Aufbau und die einzelnen Komponenten des Grossdieselmotors 20, wie beispielsweise das Einspritzsystem für den Flüssigmodus, das Gaszuführsystem für den Gasmodus, das Gaswechselsystem, das Abgassystem oder das Turboladersystem für die Bereitstellung der Spül- bzw. Ladeluft, sowie die Kontroll- und Steuerungssystem für einen Grossdieselmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung. Von diesen Komponenten ist in Fig. 1 nur ein Auslassventil 24 dargestellt, weil dies zum Verständnis der Erfindung ausreichend ist.

Bei dem hier beschriebenen Ausführungsbeispiel eines längsgespülten Zweitakt-Grossdieselmotors 20 sind üblicherweise im unteren Bereich eines jeden Zylinders 21 bzw. Zylinderliners Spülluftschlitze 22 vorgesehen, die durch die Bewegung des Kolbens 23 im Zylinder 21 periodisch verschlossen und geöffnet werden, sodass die von dem Turbolader unter einem Ladedruck bereitgestellte Spülluft durch die Spülluftschlitze in den Zylinder einströmen kann, solange diese geöffnet sind. Dies ist in Fig. 1 durch die beiden mit dem Bezugszeichen L versehenen Pfeile angedeutet. Im Zylinderkopf bzw. im Zylinderdeckel ist das meistens zentral angeordnetes Auslassventil 24 vorgesehen, durch welches die Verbrennungsgase nach dem Brennprozess aus dem Zylinder in ein Abgassystem 25 ausgetragen werden können. Für das Einbringen des flüssigen Brennstoffs sind ein oder mehrere Brennstoffeinspritzdüsen vorgesehen (nicht dargestellt), die beispielsweise im Zylinderkopf in der Nähe des Auslassventils 25 angeordnet sind. Für die Gaszuführung im Gasmodus ist ein Gaszuführsystem vorgesehen (nicht dargestellt), das mindestens ein Gaseinlassventil mit einer Gaseinlassdüse umfasst. Die Gaseinlassdüse ist typischerweise in der Wandung des Zylinders vorgesehen, beispielsweise auf einer Höhe, die etwa in der Mitte zwischen dem oberen und dem unteren Totpunkt des Kolbens liegt.

In Fig. 1 sind zusätzlich an der linken Seite verschiedene Kurbelwinkel angegeben, welche den Arbeitszyklus des Grossdieselmotors 20 in an sich bekannter Weise kennzeichnen. Die angegebenen Kurbelwinkel beziehen sich dabei auf den Kompressionshub des Kolbens 23. Bei dem Kurbelwinkel von 180° befindet sich der Kolben 23 im unteren Tot- oder Umkehrpunkt, bei dem Kurbelwinkel von 360° befindet sich der Kolben 23 im oberen Tot- oder Umkehrpunkt. Bei der Ausgestaltung als Zweitaktmotor umfasst ein kompletter Arbeitszyklus 360°. Beginnend bei 0° - bei welcher der Kolben 23 in der gleichen Position ist wie bei 360°, nämlich im oberen Totpunkt - bewegt sich der Kolben 23 nach unten bis er bei 180° den unteren Totpunkt erreicht und sich dann beim Kompressionshub wieder nach oben bewegt, bis er den oberen Totpunkt bei 360° erreicht. In der Darstellung von Fig. 1 befindet sich der Kolben 23 gerade in einer Stellung, die dem Kurbelwinkel 270° entspricht.

Bei einer Ausgestaltung als Viertakt-Motor umfasst ein kompletter Arbeitszyklus 720°, wie dies hinlänglich bekannt ist.

Im Folgenden wird ferner beispielhaft auf den Anwendungsfall Bezug genommen, dass der Grossdieselmotor das Antriebsaggregat eines Schiffes ist.

Aufgrund der gesetzlichen Bestimmungen bezüglich der Abgaswerte müssen heute Grossdieselmotoren in Küstennähe häufig im Gasmodus betrieben werden, weil sonst die vorgeschriebenen Grenzwerte für den Abgasausstoss, insbesondere sind dies Stickoxide NOₓ und Schwefeldioxide, nicht mehr eingehalten werden können.

Im Gasmodus sind die Effizienz und die möglichst schadstoffarme Verbrennung des Luft-Gas-Gemisches ganz empfindlich von dem Verhältnis der Menge an Luft und der Menge an Gas abhängig. Dieses Verhältnis wird üblicherweise durch den λ-Wert angegeben, welcher das Verhältnis aus der Masse der für die Verbrennung zur Verfügung stehenden Luft und der Masse des Gases angibt, welches als Brennstoff verwendet wird.

Das optimale Luft-zu-Gas Verhältnis hängt unter anderem von dem vom Motor zu generierenden Antriebsdrehmoment ab und damit von der gewünschten Geschwindigkeit des Schiffes. Da Grossdieselmotoren üblicherweise direkt mit der Schiffschraube des Schiffes verbunden sind, entspricht z. B. bei einem Festpropeller jeder Geschwindigkeit eine Drehzahl des Motors.

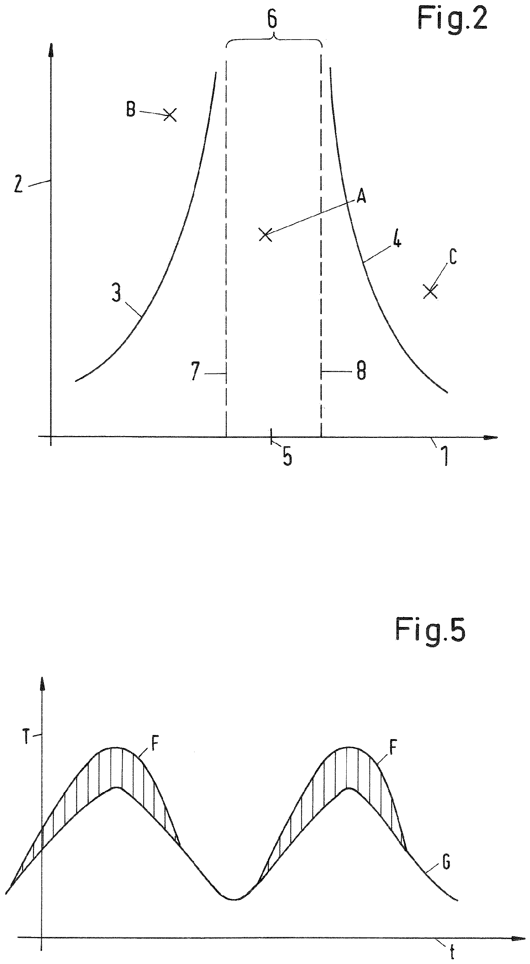

Fig. 2 zeigt in einer schematischen Darstellung einen beispielhaften Zusammenhang zwischen dem Luft-zu-Gas Verhältnis 1 und dem vom Motor generierten Drehmoment 2, welches das Schiff antreibt. Diese Darstellung gilt für ein bestimmtes Drehmoment, was einer bestimmten Geschwindigkeit des Schiffes - oder einer bestimmten Drehzahl des Motors -, entspricht, wenn sich das Schiff in im Wesentlichen ruhigem Gewässer bewegt. Im speziellen ist das in Fig. 2 dargestellte Drehmoment 2 das BMEP (Brake Mean Effective Pressure) Drehmoment, was im Wesentlichen ein über einen Arbeitszyklus (eine Periode der Kolbenbewegung für Zweitakt-Maschinen und zwei Perioden der Kolbenbewegung für Viertakt-Maschinen) gemitteltes Drehmoment ist.

In der Darstellung in Fig. 2 sind zwei Grenzkurven zu sehen, nämlich eine Klopfgrenze (knocking-Kurve) 3 und eine Zündaussetzgrenze (misfiring-Kurve) 4. Bei Betriebszuständen, die sich darstellungsgemäss oberhalb der Klopfgrenze 3 befinden, ist das Luft-Gas-Gemisch zu fett, das heisst es ist zu wenig Luft im Gemisch. Ein zu fettes Gemisch kann zu verschiedenen Problemen führen, nämlich dass die Verbrennung zu schnell abläuft (fast combustion) oder dass der Motor zu klopfen beginnt oder dass das Gemisch im Zylinder dann üblicherweise durch Selbstzündung aufgrund des zu hohen Gehalts an Gas zu früh (bezogen auf den Arbeitszyklus) zu verbrennen beginnt (pre-ignition). Bei Betriebszuständen, die darstellungsgemäss oberhalb der Zündaussetzgrenze 4 liegen, ist das Luft-Gas-Gemisch zu mager, das heisst es ist nicht genügend Gas - oder zu viel Luft - für eine optimale Verbrennung im Brennraum vorhanden.

Daher ist man bemüht, den Grossdieselmotor stets an einem optimalen Punkt 5 für das Luft-zu-Gas Verhältnis zu betreiben. In der Praxis sind natürliche Schwankungen des Drehmoments bzw. des Luft-zu-Gas-Verhältnisses 1 auch bei konstanter Drehzahl bzw. konstanter Geschwindigkeit des Schiffes nicht zu vermeiden bzw. nicht regelbar, daher gibt es einen Toleranzbereich 6, der in Fig. 2 durch die beiden Geraden 7 und 8 begrenzt ist, innerhalb dessen Abweichungen des Luft-zu-Gas Verhältnisses 1 vom optimalen Punkt 5 toleriert werden. Ein optimaler Betrieb im Gasmodus ist in Fig. 2 durch den mit A bezeichneten Betriebspunkt gegeben.

Wenn nun das Schiff aus ruhigem Wasser (worauf sich Fig. 2 bezieht) in schwere See gerät, so können daraus sehr plötzliche und starke Lastwechsel für den Motor resultieren, d.h. das von dem Motor über die Schiffsschraube auf das Wasser ausgeübte Drehmoment kann sich sehr schnell und um grosse Beträge ändern (Lastwechsel). So kann es beispielsweise sein, dass bei starkem Wellengang die Schiffschraube kurzfristig teilweise oder ganz aus dem Wasser herauskommt, was die momentane Last des Motors enorm reduziert. Taucht die Schiffschraube anschliessend wieder vollständig in das Wasser ein, so führt das zu einer deutlichen Lasterhöhung und damit zu einer Erhöhung des Drehmoments. In Fig. 2 bedeutet dies in der Praxis, dass man sich beispielsweise vom Punkt A zu dem mit B bezeichneten Punkt bewegt, der oberhalb der knocking-Kurve 3 liegt und somit in dem Bereich der "fast combustion" und/oder des Klopfens.

Andererseits kann der Motor bei einer deutlichen Lastverminderung in einen Betriebszustand geraten, der oberhalb der Zündaussetzgrenze 4 liegt, wo bezogen auf die Gasmenge zuviel Luft im Zylinder 21 ist, das Luft-Gas-Gemisch also zu mager ist. Ein solcher Betriebszustand ist in Fig. 2 beispielsweise bei dem Punkt C erreicht. Aufgrund der phasenverschobenen Antwort des Turboladersystems wird die Spülluft mit einem zu hohen Ladedruck zur Verfügung gestellt, sodass das Luft-Gas-Gemisch zu mager wird.

Da im schweren Seegang diese starken Fluktuationen der Motorlast häufig hintereinander, näherungsweise periodisch auftreten, ist somit ein effizienter, wirtschaftlicher und schadstoffarmer Betrieb des Grossdieselmotors 20 im Gasmodus nicht mehr möglich.

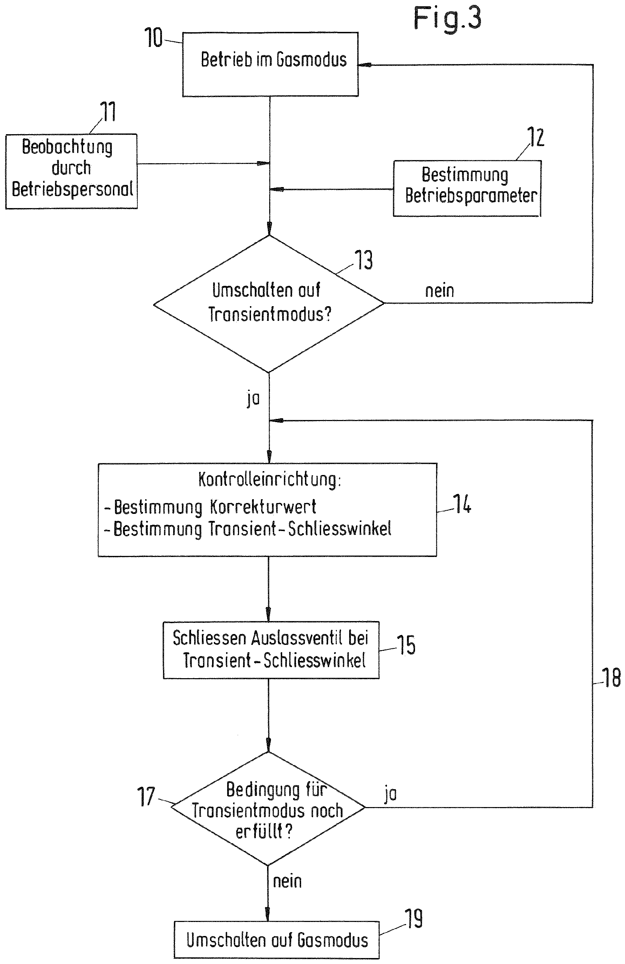

Dem wird durch das erfindungsgemässe Verfahren Abhilfe geschaffen. Fig. 3 zeigt in einer schematischen Darstellung ein erstes Ausführungsbeispiel des erfindungsgemässen Verfahrens. Ausgangspunkt ist in einem Schritt 10, dass der Grossdieselmotor im Gasmodus betrieben wird. Gerät das Schiff nun in schwere See, so kann dieser Zustand durch Beobachtung des Betriebspersonals 11 und/oder anhand der Auswertung von Betriebsparametern durch die Motorensteuerung oder andere Kontrolleinrichtungen im Schritt 12 detektiert werden. Werden die dadurch verursachten starken Lastwechsel als zu gross beurteilt, so wird in einem Schritt 13 entschieden, den Grossdieselmotor in einen Transientmodus umzuschalten.

In diesem Transientmodus wird zunächst der Schliesswinkel für das Schliessen des Auslassventils 24 im Gasmodus ermittelt. Mit dem Schliesswinkel ist dabei der Kurbelwinkel gemeint, bei welchem das Auslassventil 24 bei der Aufwärtsbewegung des Kolbens 23 geschlossen wird. Für den Gasmodus sind üblicherweise die Schliesswinkel für das Auslassventil - wie die Werte für andere Betriebsparameter auch - in einer Matrix gespeichert, deren eine Dimension die Last des Motors (bestimmt durch das generierte Drehmoment) ist und deren andere Dimension die Drehzahl des Motors ist. Somit kann aus dieser Matrix für jedes Wertepaar aus Last und Drehzahl der korrekte Schliesswinkel für den Gasmodus abgelesen werden. Dieser beträgt beispielsweise 270°, was der in Fig. 1 dargestellten Position des Kolbens 23 entspricht. In einem Schritt 14 bestimmt die Kontrolleinrichtung dann einen Korrekturwert für den Schliesswinkel. Dieser Korrekturwert kann auf unterschiedliche Weisen bestimmt werden. Insbesondere können in den Kontrollwert auch empirische Daten einfliessen, die in der Kontrolleinrichtung gespeichert sind.

Eine besonders bevorzugte Methode zur Bestimmung des Korrekturwerts besteht darin, den momentan zur Verfügung stehende Ladedruck der Spülluft für die Bestimmung des Korrekturwertes heranzuziehen. Dieser Ladedruck wird üblicherweise in einem Grossdieselmotor messtechnisch erfasst und steht somit in der Kontrolleinrichtung zur Verfügung bzw. kann an diese übermittelt werden. Insbesondere kann dabei die Bestimmung des Korrekturwertes mit Hilfe der Differenz aus dem momentanen Wert des zur Verfügung stehenden Ladedrucks der Spülluft und dem benötigten Ladedruck der Spülluft bestimmt werden. Der benötigte Ladedruck für die aktuellen Betriebsparameter ist beispielsweise in look-up-Tabellen oder -Matrizen gespeichert. Aus der Differenz aus dem momentan zur Verfügung stehenden Ladedruck und dem benötigten Ladedruck lässt sich bei bekanntem Volumen des Zylinders bzw. des Raums zwischen dem Zylinderkopf und der Oberseite des Kolbens ermitteln, um wieviel früher oder später das Auslassventil 24 geschlossen werden muss, damit bei dem momentan zur Verfügung stehenden Ladedruck unmittelbar nach dem Schliessen des Auslassventils 24 die gleiche Luftmenge im Zylinder vorhanden ist, wie sie es bei dem Schliesswinkel für den Gasmodus und dem benötigten Ladedruck wäre.

Die Kontrolleinrichtung bestimmt dann einen Transient-Schliesswinkel für das Auslassventil durch Verknüpfen des Schliesswinkels mit dem Korrekturwert. Vorzugsweise wird der Korrekturwert zu dem Schliesswinkel addiert, um den Transientschliesswinkel zu bestimmen. Im Schritt 15 veranlasst die Kontrolleinrichtung dann das Schliessen des Auslassventils 24 bei dem Transient-Sch liesswin kel.

Ist also aufgrund der phasenverschobenen Antwort des Turboladersystems der momentane Ladedruck auf einen Lastwechsel zu gering, so ist der Korrekturwert negativ, das heisst, das Auslassventil 24 wird bereits bei einem Transient-Schliesswinkel geschlossen, der kleiner ist, als der Schliesswinkel für den Gasmodus.

Ist hingegen aufgrund der phasenverschobenen Antwort des Turboladersystems auf einen Lastwechsel der momentane Ladedruck zu gross, so ist der Korrekturwert positiv, das heisst, das Auslassventil 24 wird erst bei einem Transient-Schliesswinkel geschlossen, der grösser ist, als der Schliesswinkel für den Gasmodus.

Im Schritt 17 wird kontinuierlich oder in regelmässigen Abständen durch Beobachtungen des Betriebspersonals und/oder durch die Bestimmung von den Betriebsparametern überprüft, ob die Bedingungen für die Aktivierung des Transientmodus noch erfüllt sind. Falls ja, wird der Transientmodus beibehalten, wie dies der Pfeil 18 in Fig. 3 zeigt, wobei vorzugsweise die Werte für den Korrekturwert bzw. den Transient-Schliesswinkel überprüft bzw. aktualisiert werden.

Sind bei der Überprüfung im Schritt 17 die Bedingungen für den Transientmodus nicht mehr erfüllt, so kann im Schritt 19 wieder in den normalen Gasmodus umgeschaltet werden.

Die Kontrolleinrichtung zum Einleiten und Durchführen des Transientmodus ist vorzugsweise in die Motorensteuerung integriert.

Durch diese Änderungen bezüglich des Schliessens des Auslassventils 24 lässt sich auch im Transientmodus gewährleisten, dass der Grossdieselmotor in einem Betriebszustand arbeitet, der innerhalb des Toleranzbereichs 6 liegt, der in Fig. 2 durch die beiden Geraden 7 und 8 begrenzt ist.

In der Praxis hat es sich bewährt, wenn im Falle eines negativen Korrekturwerts dessen Betrag höchstens 60° betragt und im Falle eines positiven Korrekturwerts dieser höchstens 60° beträgt. Gemäss der Darstellung in Fig. 1 ist also bei einem Schliesswinkel des Auslassventils 24 im Gasmodus von 270° der minimale Transient-Schliesswinkel 210° und der maximale Transient-Schliesswinkel 330°.

Durch die Änderung des Schliesswinkels zum Transient-Schliesswinkel im Transientbetrieb kann sich die Kompressionsendtemperatur des Luft-Gas-Gemisches im Zylinder erhöhen oder erniedrigen. Dies ist in aller Regel jedoch nicht sehr kritisch, es sollte nur vermieden werden, dass die Kompressionsendtemperatur so grosse Werte annimmt, dass es zu einer Selbstzündung des Gas-Luft-Gemisches im Zylinder kommt. Dies lässt sich beispielsweise durch die Vorgabe von Maximalwerten für den Korrekturwert bzw. seinen Betrag anwendungsspezifisch gewährleisten.

Im folgenden wird ein zweites bevorzugtes Ausführungsbeispiel beschrieben, welches eine Erweiterung des ersten Ausführungsbeispiels darstellt. Die bisherigen Ausführungen, insbesondere die Erläuterungen des ersten Ausführungsbeispiels, gelten daher in sinngemäss gleicher Weise auch für das zweite Ausführungsbeispiel. Bei dem zweiten Ausführungsbeispiel wird im Transientmodus zusätzlich zu der Korrektur des Schliesswinkels für das Auslassventil zum Transient-Schliesswinkel die Menge an Gas, die pro Arbeitszyklus des Grossdieselmotors als Brennstoff bereitgestellt wird, durch eine Obergrenze begrenzt und es wird eine Zusatzmenge eines flüssigen Brennstoffs bestimmt, der zusätzlich zu dem Gas in den Brennraum eingebracht wird, wobei diese Zusatzmenge so bemessen ist, dass ein Sollwert für die Drehzahl realisiert wird.

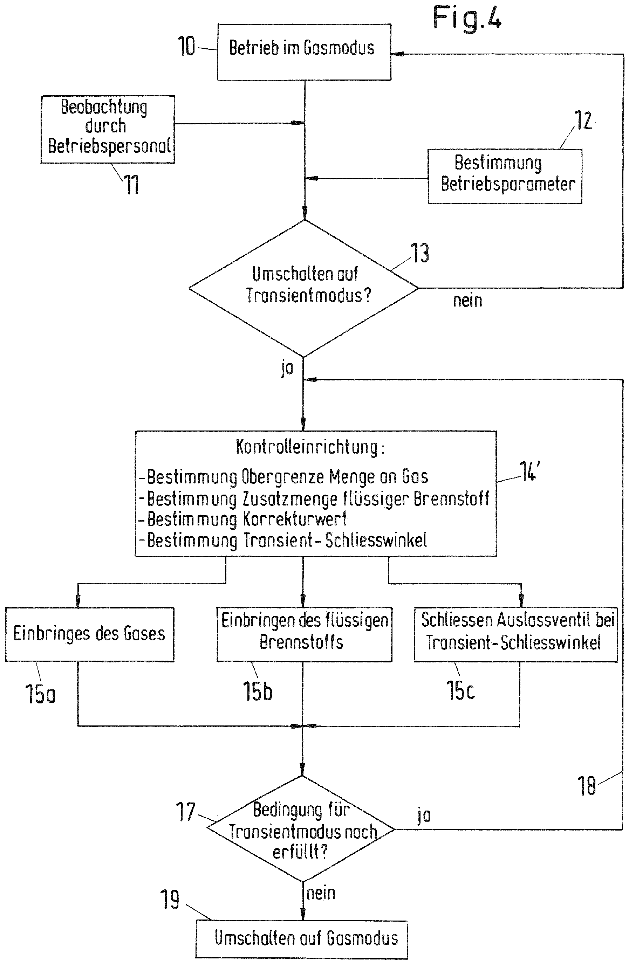

Fig. 4 zeigt in einer schematischen, zu Fig. 3 analogen Darstellung das zweite Ausführungsbeispiel des erfindungsgemässen Verfahrens. Ausgangspunkt ist im Schritt 10, dass der Grossdieselmotor im Gasmodus betrieben wird. Wie bereits beim ersten Ausführungsbeispiel so kann auch hier der Zustand starker oder plötzlicher Lastwechsel, wie sie in schwerer See oder auch im Manövrierbetrieb auftreten können, durch Beobachtung des Betriebspersonals 11 und/oder anhand der Auswertung von Betriebsparametern durch die Motorensteuerung oder andere Kontrolleinrichtungen im Schritt 12 detektiert werden. Werden die starken Lastwechsel als zu gross beurteilt, so wird im Schritt 13 entschieden, den Grossdieselmotor in den Transientmodus umzuschalten.

In diesem Transientmodus wird zunächst ein Sollwert für die Drehzahl oder das von dem Motor zu generierende Drehmoment festgelegt. Dies kann beispielsweise der Wert sein, welcher der Bewegung des Schiffs im ruhigen Wasser entspricht. In einem Schritt 14' bestimmt die Kontrolleinrichtung eine Obergrenze für die Menge an Gas, die pro Arbeitszyklus des Grossdieselmotors als Brennstoff bereitgestellt wird. Diese Obergrenze wird dabei so festgelegt, dass die im Zylinder 21 zur Verfügung stehende Spülluft ausreichend ist, um die durch die Obergrenze festgelegte maximale Menge an Gas so zu verbrennen, dass der Bereich der "fast combustion" und/oder der klopfenden Verbrennung und/oder der Bereich der "pre-ignition" vermieden wird, das Luft-Gas-Gemisch also nicht zu fett wird. Die Obergrenze für die maximal zulässige Menge an Gas zur Vermeidung der Überschreitung der Klopfgrenze 3 (Fig.1) hängt von der Masse der im Zylinder vorhandenen Luft ab. Bei bekanntem Zylindervolumen kann diese Masse der Luft mit Hilfe des zur Verfügung stehenden Ladedrucks der Spülluft bestimmt werden. Dabei werden natürlich die Schwankungen des Ladedrucks berücksichtigt, d.h. man geht vorteilhafterweise von einem minimalen Ladedruck aus, der auf jeden Fall zur Verfügung steht. In die Bestimmung einer geeigneten Obergrenze für die Gasmenge können natürlich auch Erfahrungswerte oder andere bekannte Betriebsgrössen des Grossdieselmotors einfliessen. Zudem wird im Schritt 14' -wie im Zusammenhang mit dem ersten Ausführungsbeispiel beschrieben- ein Korrekturwert für den Schliesswinkel bestimmt, und dieser Korrekturwert mit dem Schlieeswinkel verknüpft, vorzugweise additiv, um den Transient-Schliesswinkel für das Auslassventil 24 zu bestimmen.

Besonders bevorzugt wird der momentan zur Verfügung stehende Ladedruck der Spülluft für die Bestimmung der Obergrenze der Menge an Gas herangezogen. Insbesondere kann dabei die Bestimmung der Obergrenze für die Gasmenge mit Hilfe der Differenz aus dem momentanen Wert des zur Verfügung stehenden Ladedrucks der Spülluft und dem benötigten Ladedruck der Spülluft bestimmt werden. Der benötigte Ladedruck für die aktuellen Betriebsparameter ist beispielsweise in look-up-Tabellen oder -Matrizen gespeichert.

Die Kontrolleinrichtung umfasst dann eine vom Ladedruck und gegebenenfalls auch vom Transient-Schliesswinkel abhängige Obergrenze für die Gasmenge, die dem Zylinder als Brenngas zugeführt werden kann und begrenzt die Menge an Gas auf diese Obergrenze. Damit nun die Drehzahl oder das vom Motor generierte Drehmoment auf dem Sollwert gehalten werden kann, wird von der Kontrolleinrichtung im Schritt 14' ferner eine Zusatzmenge an flüssigem Brennstoff bestimmt, die so bemessen ist, dass sie die Differenz zwischen dem Sollwert für die Drehzahl oder das Drehmoment und dem mit der maximalen Gasmenge erzielbaren Wert ausgleicht.

Das bedeutet, die Kontrolleinrichtung bestimmt denjenigen Wert für das Drehmoment oder die Drehzahl, der mit der durch die Obergrenze festgelegten maximalen Menge an Gas erreichbar ist. Dann wird die Differenz aus dem Sollwert und diesem Wert ermittelt. Anschliessend wird die Menge an flüssigem Brennstoff bestimmt, die benötigt wird, um diese Differenz auszugleichen.

Die Massnahmen der Bestimmung der Obergrenze für die Gasmenge, der Zusatzmenge des flüssigen Brennstoffs und des Transient-Schliesswinkels sind natürlich nicht unabhängig voneinander, aber es stellt kein grösseres Problem dar, diese Massnahmen so aufeinander abzustimmen, dass ein möglicht optimaler Betrieb des Grossdieselmotors im Transientmodus gewährleistet ist.

Es ist natürlich auch möglich, die Zusatzmenge des flüssigen Brennstoffs auf einen fest bemessenen Wert zu fixieren.

Nun wird im Schritt 15 das Auslassventil 24 bei dem Transient-Schliesswinkel geschlossen und die ermittelte Menge an Gas im Schritt 15a in den Zylinder eingebracht und dort wie im Gasmodus zur Verbrennung gebracht. Gleichzeitig, d.h. im gleichen Arbeitszyklus, wird die vorgängig bestimmte Menge des flüssigen Brennstoffs im Schritt 15b in den Zylinder eingebracht und zündet sich dort selbst. Durch die gemeinsame Verbrennung des Gases und des zusätzlich eingebrachten flüssigen Brennstoffs kann somit der Sollwert für die Drehzahl oder das Drehmoment generiert werden. Die Selbstzündung des flüssigen Brennstoffs kann dabei zur Fremdzündung des Luft-Gas Gemisches verwendet werden.

Im Schritt 17 wird kontinuierlich oder in regelmässigen Abständen durch Beobachtungen des Betriebspersonals und/oder durch die Bestimmung von den Betriebsparametern überprüft, ob die Bedingungen für die Aktivierung des Transientmodus noch erfüllt sind. Falls ja, wird der Transientmodus beibehalten, wie dies der Pfeil 18 in Fig. 4 zeigt, wobei vorzugsweise die Werte für die Obergrenze der Menge an Gas, für den Transient-Schliesswinkel und für die Zusatzmenge an flüssigem Brennstoff überprüft bzw. aktualisiert werden.

Sind bei der Überprüfung im Schritt 17 die Bedingungen für den Transientmodus nicht mehr erfüllt, so kann im Schritt 19 wieder in den normalen Gasmodus umgeschaltet werden.

Die Kontrolleinrichtung zum Einleiten und Durchführen des Transientmodus ist vorzugsweise in die Motorensteuerung integriert.

In dem Transientmodus wird somit durch eine Kombination der Verbrennung von Gas mit einer Verbrennung von flüssigem Brennstoff und einer Anpassung des Schliesswinkels für das Auslassventil 24 gewährleistet, dass der Sollwert für die Motorgeschwindigkeit, d.h. die Drehzahl oder der Sollwert für das Drehmoment aufrecht erhalten bleibt, ohne dass die Verbrennung des Gases im Bereich der "fast combustion" und/oder im Bereich des Klopfens erfolgt. Durch die Obergrenze für die Menge an Gas ist gewährleistet, dass das Luft-Gas-Gemisch im Brennraum nicht zu fett wird. Ferner wird vermieden, insbesondere durch die Änderung des Schliesswinkel zum Transient-Schliesswinkel, dass die Zündaussetzgrenze 4 (Fig. 2) überschritten wird. Somit wird der Grossdieselmotor 20 auch im Transientmodus stets innerhalb des Toleranzbereichs 6 (Fig. 2) betrieben.

Durch dieses Verfahren kann also beispielsweise ein Dual-Fuel Grossdieselmotor, der im Gasbetrieb nach dem Otto-Prinzip arbeitet, eine zumindest näherungsweise gleiche Lastwechsel-Antwort erreichen, wie ein nur nach dem Dieselprinzip arbeitender Grossdieselmotor, der ausschliesslich mit flüssigem Brennstoff betrieben wird. Denn einerseits ist sichergestellt, das bei dem erfindungsgemässen Verfahren bzw. bei dem erfindungsgemässen Grossdieselmotor das Luft-Gas-Gemisch nicht zu fett und nicht zu mager wird, und andererseits reagiert der zum flüssigen Brennstoff gehörende Verbrennungsanteil viel weniger empfindlich auf einen zu geringen Ladedruck der Spülluft. Somit können insbesondere in schwerer See auch beim Gasbetrieb die Laufstabilität des Grossdieselmotors verbessert werden und die Geschwindigkeitsfluktuationen reduziert werden.

Die schematische Darstellung in Fig. 5 veranschaulicht das Zusammenwirken der Gasverbrennung und der Verbrennung des flüssigen Brennstoffs im Transientmodus nochmals anhand eines Beispiels. Aufgetragen ist das Drehmoment T des Grossdieselmotors in Abhängigkeit von der Zeit t, wie es bei schwerer See auftreten kann. Die hohen Wellenbewegungen, denen das Schiff dann ausgesetzt ist, verursachen eine -näherungsweise- periodische zeitliche Änderung des Drehmoments T. Die Kurve G zeigt den Anteil des Drehmoments, der durch die Verbrennung des Gases verursacht wird, wobei die maximale Gasmenge so begrenzt ist, dass die zur Verfügung stehende Spülluft unter Berücksichtigung des Transient-Schliesswinkels ausreicht, damit das Luft-Gas-Gemisch nicht zu fett wird. Die beiden Kurven mit dem Bezugszeichen F, welche die schraffiert dargestellten Bereiche begrenzen, zeigen den zusätzlichen Beitrag zum Drehmoment T der durch die zusätzliche Verbrennung des flüssigen Brennstoffs generiert wird.

Zur Vermeidung eines zu mageren Gemisches im Zylinder ist insbesondere die Bestimmung des Transient-Schliesswinkels geeignet. Denn durch ein im Vergleich zum Gasmodus verspätetes Schliessen des Auslassventils 24, was in diesem Beispiel einem positiven Korrekturwert und somit einem Transient-Schliesswinkel entspricht, der grösser ist als der Schliesswinkel im Gasbetrieb, kann zu viel vorhandene Luft im Zylinder 21 durch das Auslassventil 24 ausgeschoben werden, bevor dieses geschlossen wird.

Für die Einbringung der zusätzlichen Menge an flüssigem Brennstoff in den Brennraum des Zylinders während des Transientmodus gibt es verschiedene Möglichkeiten. Falls der Grossdieselmotor als Dual-Fuel Motor ausgestaltet ist, kann für die Einspritzung des flüssigen Brennstoffs die gleiche Einspritzvorrichtung verwendet werden, die auch im Flüssigmodus für die Einspritzung des Brennstoffs verwendet wird.

Eine weitere Möglichkeit zum Einbringen des flüssigen Brennstoffs im Transientmodus besteht darin, dass der flüssige Brennstoff mittels einer Piloteinspritzvorrichtung in den Brennraum eingebracht wird, welche im Gasmodus zur Zündung des Luft-Gas Gemisches verwendet wird.

Natürlich ist es auch möglich, dass für das Einbringen des flüssigen Brennstoffs während des Transientmodus eine separate Einspritzvorrichtung vorgesehen ist. Dies ist insbesondere bevorzugt, wenn der Grossdieselmotor nicht für den Flüssigmodus ausgestaltet ist und keine dementsprechende Einspritzvorrichtung aufweist.

Bezüglich des Einbringens des Gases in den Brennraum des Zylinders, sowohl während des Transientmodus als auch während des Gasmodus, gibt es mehrere bevorzugte Varianten. Wie bereits voranstehend erwähnt, kann ein Gaszuführsystem mit mindestens einer Gaseinlassdüse vorgesehen sein, welche im Zylinderliner angeordnet ist, sodass das Gas in den Zylinder einbringbar ist und sich dort mit der Spülluft zu dem zündfähigen Luft-Gas Gemisch vermischt.

Es ist aber auch möglich, eine oder mehrere Gaseinlassdüsen am Zylinderkopf bzw. am Zylinderdeckel vorzusehen, sodass die Zuführung des Gases in den Zylinder vom Zylinderkopf aus erfolgt und sich das Gas dann mit der Spülluft vermischt.

Eine weitere Möglichkeit besteht darin, das Gas der Spülluft zuzuführen, bevor die Spülluft in den Zylinder eingebracht wird. Das Gas vermischt sich dann bereits ausserhalb des Zylinderinnenraums mit der Spülluft zu einem Luft-Gas Gemisch, das dann in den Zylinder eingebracht wird, beispielsweise durch die Spülluftschlitze oder Spülluftöffnungen. Hierbei kann die Gaszuführung in die Spülluft an einer Stelle zwischen dem Ausgang des Turboladersystems und den Eintrittsöffnungen in den Innenraum des Zylinders, beispielsweise den Spülluftschlitzen, erfolgen.

Insbesondere ist es auch möglich, das Gas der Spülluft dann zuzuführen,wenn die Spülluft in den Zylinder eingebracht wird. Hierzu ist es beispielsweise möglich, an einem oder mehreren Stegen, die benachbarte Spülluftschlitze trennen, jeweils eine oder mehrere Gaseinlassdüsen vorzusehen, sodass sich die Spülluft beim Durchtritt durch die Spülluftschlitze mit dem Gas durchmischt.

Die Betriebsparameter, welche im Schritt 12 (Fig. 3 und Fig. 4) bestimmt oder analysiert werden, um im Schritt 13 zu beurteilen, ob in den Transientmodus umgeschaltet werden soll, sind vorzugsweise solche Parameter, die in der Motorensteuerung bereits vorliegen, also für den Betrieb oder während des Betriebs des Grossdieselmotor sowieso erfasst werden, oder aus solchen Parametern ableitbare Grössen. Es ist auch möglich, dass für die Entscheidung des Umschaltens in den Transientmodus nur ein Betriebsparameter herangezogen wird, oder die Entscheidung zum Umschalten in den Transientmodus alleine aufgrund der Beobachtungen durch das Betriebspersonal erfolgt, welches den Transientmodus auch manuell einleiten kann.

Als Betriebsparameter für den Schritt 12 bzw. die Entscheidung im Schritt 13 eignen sich beispielsweise einer oder mehrere der folgenden Grössen: Der aktuelle Druck der Spülluft, die von dem Turboladersystem zur Verfügung gestellt wird, bzw. die Änderung dieses Druckes, der Zylinderdruck, das berechnete Luft-zu Gas-Verhältnis, Signale eines Klopfdetektors, mit welchem erkennbar ist, wenn die Verbrennung im Zylinder klopfend erfolgt, also das Luft-Gas Gemisch zu fett ist, das Verhältnis aus Drehzahl zu Last des Motors oder Änderungen in diesem Verhältnis oder das gemessene Drehmoment oder dessen zeitliche Änderung oder die Menge des Brennstoffs für die Einspritzung der benötigt wird, um die Drehzahl des Motors zu halten (Einblasmenge) oder Änderungen dieser Einblasmenge.

Das erfindungsgemässe Verfahren lässt sich insbesondere auch dazu verwenden, um bereits bestehende Grossdieselmotoren, insbesondere Dual-Fuel Motoren, nachzurüsten. Da in solchen Grossdieselmotoren die apparativen Voraussetzungen zur Durchführung eines erfindungsgemässen Verfahrens häufig schon erfüllt sind oder mit geringem Aufwand bzw. Umbau realisierbar sind, ist es oft möglich, den Grossdieselmotor durch entsprechende Anpassungen oder Ergänzungen in der Motorensteuerung für den Transientbetrieb bereit zu machen. Diese Möglichkeit der Nachrüstung ist insbesondere auch im Hinblick auf die Einhaltung der Emissionsgrenzwerte ein grosser Vorteil.

Auch wenn hier für den Transientmodus die Massnahmen der Bestimmung einer Obergrenze für die Menge an Gas, die pro Arbeitszyklus als Brennstoff bereitgestellt wird, und die Bestimmung einer Zusatzmenge des flüssigen Brennstoffs, der zusätzlich zu dem Gas in den Brennraum eingebracht wird, nur in Kombination mit der Bestimmung des Transient-Schliesswinkels beschrieben sind, so sind diese Massnahmen auch eigenständig, das heisst ohne Änderungen des Schliesswinkels für das Auslassventil durchführbar. Das heisst, das zweite Ausführungsbeispiel lässt sich auch so modifizieren, dass der Schliesswinkel im Vergleich zum Gasbetrieb nicht geändert wird.

## Patentansprüche

1. Verfahren zum Betreiben eines Grossdieselmotors, der als Dual-Fuel Motor zur Verbrennung eines Gases und zur Verbrennung eines flüssigen Brennstoffs, insbesondere Diesel oder Schweröl, ausgestaltet ist, und welcher zumindest in einem Gasmodus betreibbar ist, in welchem das Gas als Brennstoff in einen Zylinder (21) eingebracht wird und nach der Verbrennung durch ein Auslassventil (24) abgeführt wird, wobei während des Betriebs im Gasmodus (10) der Grossmotor in Abhängigkeit von detektierten Lastwechseln in einem Transientmodus betrieben wird, der die folgenden Schritte umfasst:
- Ermitteln eines Schliesswinkels für das Schliessen des Auslassventils im Gasmodus,
- Bestimmen eines Korrekturwerts für den Schliesswinkel (14),
- Bestimmen eines Transient-Schliesswinkels (14) durch Addieren des Korrekturwerts zu dem Schliesswinkel,
- Schliessen des Auslassventils bei dem Transient-Schliesswinkel (15),
**dadurch gekennzeichnet, dass** der Transientmodus die folgenden Schritte umfasst:
- Festlegen eines Sollwertes für die Drehzahl oder das Drehmoment des Motors
- Bestimmen einer Obergrenze für die Menge an Gas (14), die pro Arbeitszyklus des Grossdieselmotors als Brennstoff bereitgestellt wird,
- Bestimmen einer Zusatzmenge des flüssigen Brennstoffs (14), der zusätzlich zu dem Gas in den Brennraum eingebracht wird, wobei die Zusatzmenge so bemessen ist, dass der Sollwert für die Drehzahl oder das Drehmoment realisiert wird .

2. Verfahren nach Anspruch 1, wobei der Korrekturwert negativ ist und sein Betrag höchstens 60 Grad beträgt.

3. Verfahren nach Anspruch 1, wobei der Korrekturwert positiv ist und höchstens 60 Grad beträgt.

4. Verfahren nach einem der vorangehenden Ansprüche, bei welchem der jeweils aktuelle zur Verfügung stehende Druck der Spülluft zur Bestimmung der Obergrenze für die Menge an Gas (14) oder des Korrekturwerts (14) herangezogen wird.

5. Verfahren nach einem der vorangehenden Ansprüche, bei welchem der Transientmodus manuell eingeleitet wird.

6. Verfahren nach einem der vorangehenden Ansprüche, bei welchem der Transientmodus in Abhängigkeit von mindestens einem der folgenden Parameter eingeleitet wird: aktueller Druck der Spülluft, Zylinderdruck, berechnetes Luft-zu-Gas-Verhältnis, Signal eines Klopfdetektors, Verhältnis aus Drehzahl zu Last des Motors, Änderung des Verhältnisses aus Drehzahl zu Last des Motors, Drehmoment des Motors, Änderung des Drehmoments, Menge des benötigten Brennstoffs für die Einspritzung, Änderung der Menge des benötigten Brennstoffs für die Einspritzung.

7. Verfahren nach einem der vorangehenden Ansprüche, bei welchem die Zuführung des Gases in den Zylinder (21) durch einen Zylinderliner hindurch erfolgt.

8. Verfahren nach einem der vorangehenden Ansprüche, bei welchem das Gas der Spülluft zugeführt wird, bevor die Spülluft in den Zylinder (21) eingebracht wird oder wenn die Spülluft in den Zylinder (21) eingebracht wird.

9. Grossdieselmotor, welcher als Dual-Fuel Motor zur Verbrennung eines Gases und zur Verbrennung eines flüssigen Brennstoffs, insbesondere Diesel oder Schweröl, ausgestaltet ist, welcher zumindest in einem Gasmodus (10) betreibbar ist, und welcher nach einem Verfahren gemäss einem der vorangehenden Ansprüche betrieben wird.

10. Grossdieselmotor nach Anspruch 9, bei welchem eine Motorensteuerung vorgesehen ist, welche eine Kontrolleinrichtung (14) zum Einleiten und Durchführen des Transientmodus umfasst.

11. Verwendung eines Verfahrens nach einem der Ansprüche 1-8 zur Nachrüstung eines Grossdieselmotors, insbesondere eines Dual-Fuel Motors.

## Claims

1. A method of operating a large diesel engine which is configured as a dual fuel engine for the combustion of a gas and for the combustion of a liquid fuel, in particular diesel or heavy fuel oil, and which can be operated at least in a gas mode, in which the gas is introduced into a cylinder (21) as fuel and is discharged through an outlet valve (24) after combustion, wherein, during the operation in the gas mode (10), the large engine is operated in a transient mode in dependence on detected load changes, which comprises the following steps:
- establishing a dwell angle for the closure of the outlet valve in the gas mode,
- determining a correction value for the dwell angle (14),
- determining a transient dwell angle (14) by adding the correction value to the dwell angle,
- closing the outlet valve at the transient dwell angle (15),
**characterized in that** the transient mode comprises the following steps:
- determining a desired value for the speed of rotation or the torque of the engine,
- determining an upper threshold for the amount of gas (14) that is made available as fuel per work cycle of the large diesel engine,
- determining an additional amount of the liquid fuel (14) that is introduced into the combustion space in addition to the gas, wherein the additional amount is dimensioned in such a way that the desired value for the speed of rotation is realized.

2. A method in accordance with claim 1, wherein the correction value is negative, and its magnitude amounts to at most 60 degrees.

3. A method in accordance with claim 1, wherein the correction value is positive and amounts to at most 60 degrees.

4. A method in accordance with any one of the preceding claims, in which the respectively currently made available pressure of the scavenging air is drawn on for the determination of the upper threshold for the amount of gas (14) or of the correction value (14).

5. A method in accordance with any one of the preceding claims, in which the transient mode is manually initiated.

6. A method in accordance with any one of the preceding claims, in which the transient mode is initiated in dependence on at least one of the following parameters: current pressure of the scavenging air, cylinder pressure, calculated air to gas ratio, signal of a knocking detector, ratio of the speed of rotation to the load of the engine, change of the ratio of speed of rotation to the load of the engine, torque of the engine, change of the torque, amount of the fuel required for the injection, change of the amount of fuel required for the injection.

7. A method in accordance with any one of the preceding claims, in which the supply of the gas into the cylinder (21) takes place through a cylinder liner.

8. A method in accordance with any one of the preceding claims, in which the gas is supplied to the scavenging air before the scavenging air is introduced into the cylinder (21) or when the scavenging air is introduced into the cylinder (21).

9. A large diesel engine which is configured as a dual fuel engine for the combustion of a gas and for the combustion of a liquid fuel, in particular diesel or heavy fuel oil, which can be operated at least in a gas mode (10) and which is operated in accordance with a method in accordance with any one of the preceding claims.

10. A large diesel engine in accordance with claim 9, in which an engine control is provided which comprises a control apparatus (14) for initiating and carrying out the transient mode.

11. Use of a method in accordance with any one of the claims 1 - 8 for the retrofitting of a large diesel engine, in particular a dual fuel engine.

## Revendications

1. Procédé pour faire fonctionner un gros moteur diesel, qui est conçu comme un moteur bicarburant pour la combustion d'un gaz et pour la combustion d'un carburant liquide, en particulier du diesel ou du pétrole lourd, et qui peut fonctionner au moins dans un mode de gaz, dans lequel le gaz est introduit comme carburant dans un cylindre (21) et est évacué après la combustion par une soupape d'échappement (24), dans lequel, pendant le fonctionnement dans le mode de gaz (10), le gros moteur fonctionne en fonction de changements de charge détectés dans un mode transitoire, qui comprend les étapes suivantes :
- détermination d'un angle de fermeture pour la fermeture de la soupape d'échappement dans le mode de gaz,
- détermination d'une valeur de correction pour l'angle de fermeture (14),
- détermination d'un angle de fermeture transitoire (14) par addition de la valeur de correction à l'angle de fermeture,
- fermeture de la soupape d'échappement à l'angle de fermeture transitoire (15), **caractérisé en ce que** le mode transitoire comprend les étapes suivantes :
- fixation d'une valeur de consigne pour la vitesse de rotation ou le couple du moteur,
- détermination d'une limite supérieure pour la quantité de gaz (14), qui est fournie comme carburant par cycle de travail du gros moteur diesel,
- détermination d'une quantité supplémentaire du carburant liquide (14), qui est introduite dans la chambre de combustion en plus du gaz, dans lequel la quantité supplémentaire est dimensionnée de telle sorte que la valeur de consigne pour la vitesse de rotation ou le couple du moteur est réalisée.

2. Procédé selon la revendication 1, dans lequel la valeur de correction est négative et sa valeur est d'au plus 60 degrés.

3. Procédé selon la revendication 1, dans lequel la valeur de correction est positive et est d'au plus 60 degrés.

4. Procédé selon l'une quelconque des revendications précédentes, dans lequel la pression actuellement disponible respective de l'air de balayage est utilisée pour déterminer la limite supérieure pour la quantité de gaz (14) ou la valeur de correction (14).

5. Procédé selon l'une quelconque des revendications précédentes, dans lequel le mode transitoire est lancé manuellement.

6. Procédé selon l'une quelconque des revendications précédentes, dans lequel le mode transitoire est lancé en fonction d'au moins l'un des paramètres suivants : pression actuelle de l'air de balayage, pression du cylindre, rapport air/gaz calculé, signal d'un détecteur de cognement, rapport entre la vitesse de rotation et la charge du moteur, modification du rapport entre la vitesse de rotation et la charge du moteur, couple du moteur, modification du couple, quantité du carburant nécessaire pour l'injection, modification de la quantité du carburant nécessaire pour l'injection.

7. Procédé selon l'une quelconque des revendications précédentes, dans lequel l'amenée du gaz dans le cylindre (21) s'effectue à travers une chemise de cylindre.

8. Procédé selon l'une quelconque des revendications précédentes, dans lequel le gaz est amené à l'air de balayage avant que l'air de balayage ne soit introduit dans le cylindre (21) ou lorsque l'air de balayage est introduit dans le cylindre (21).

9. Gros moteur diesel, qui est conçu comme un moteur bicarburant pour la combustion d'un gaz et pour la combustion d'un carburant liquide, en particulier du diesel ou du pétrole lourd, qui peut fonctionner au moins dans un mode de gaz (10), et qui fonctionne selon un procédé selon l'une quelconque des revendications précédentes.

10. Gros moteur diesel selon la revendication 9, dans lequel une commande de moteur est prévue, qui comprend un dispositif de contrôle (14) pour lancer et exécuter le mode transitoire.

11. Utilisation d'un procédé selon l'une quelconque des revendications 1 à 8 pour le rééquipement d'un gros moteur diesel, en particulier d'un moteur bicarburant.
